**Europäisches Patentamt**

**European Patent Office**

**Office européen des brevets**

(19)

(11) Veröffentlichungsnummer: **0 353 451**

**A2**

(12) # EUROPÄISCHE PATENTANMELDUNG

(21) Anmeldenummer: **89111557.8**

(22) Anmeldetag: **24.06.89**

(51) Int. Cl.⁴: **G05B 19/417 , B23F 23/00**

(30) Priorität: **02.08.88 CH 2909/88**

(43) Veröffentlichungstag der Anmeldung:
**07.02.90 Patentblatt 90/06**

(84) Benannte Vertragsstaaten:
**BE CH DE ES FR GB IT LI SE**

(71) Anmelder: **Werkzeugmaschinenfabrik Oerlikon-Bührle AG**
**Birchstrasse 155**
**CH-8050 Zürich(CH)**

(72) Erfinder: **Stadtfeld, Hermann, Dr.**
**Altmoosstrasse 21**
**CH-8157 Dielsdorf(CH)**

(54) **Vorrichtung zur Erzeugung eines Zahnrades.**

(57) Eine Vorrichtung zum Erzeugen von Zahnrädern enthält mindestens einige der folgenden Elemente:
- eine Verzahnungsmaschine (10) zum Schneiden der Zahnflanken (18) an den Zähnen (19) eines Zahnrades (16);
- eine Schleifmaschine (12) zum Schleifen der geschnittenen Zahnflanken (18);
- eine Läppmaschine (13) zum Läppen der geschnittenen oder geschliffenen Zahnflanken (18);
- ein Koordinatenmessgerät (11) zum Vermessen der geschnittenen, geschliffenen oder geläppten Zahnflanken (18);
- eine Testmaschine (13) zum Testen des Tragbildes dieser Zahnflanken (18);
- ein Verzahnungsrechner (14) zur Steuerung der Herstellung der Zahnräder (18); und
- Disketten als Verbindungsmittel zwischen diesen Elementen.

Erfindungsgemäss werden einzelne dieser Elemente zu Kreisen zusammengefasst, welche ein iteratives oder schrittweises Beseitigen von Verzahnungsfehlern ermöglichen.

FIG. 1

## Vorrichtung zur Erzeugung eines Zahnrades

Die Erfindung betrifft eine Vorrichtung zur Erzeugung eines Zahnrades, insbesondere eines spiralverzahnten Kegelrades, gemäss Anspruch 1.

Bei der Herstellung eines Werkstückes, insbesondere eines Zahnrades, kommt es darauf an, ein möglichst exaktes Werkstück von möglichst hoher Qualität zu erhalten, unabhängig von der Qualität der Bearbeitungsmaschine und von der Qualität des Werkzeuges, insbesondere eines Messers. Es darf nicht sein, dass mit frisch geschliffenen Werkzeugen ein wesentlich anderes Werkstück entsteht als mit schon etwas stumpfen Werkzeugen. Das Ziel ist, auch mit alten, weniger guten Maschinen hochwertige Werkstücke erzeugen zu können.

Die Aufgabe, welche mit der vorliegenden Erfindung gelöst werden soll, besteht in der Schaffung einer Vorrichtung zur Erzeugung eines Werkstückes, insbesondere eines Zahnrades, bei dem die Qualität der erzeugten Werkstücke nicht mehr von der Qualität der Werkzeugmaschinen, insbesondere der Verzahnungsmaschinen, oder von der Qualität der Werkzeuge, insbesondere der Messer, oder von der Qualität einer Schleifmaschine abhängt, sondern von der Genauigkeit von Rechenprogrammen und von der Qualität von Meisterwerkstücken, insbesondere Meisterzahnrädern, d.h. Meisterritzel und Meistertellerrad, und von der geforderten Qualität des Produktes, d.h. der geforderten Qualität der Werkstücke. Während der Herstellung des Werkstückes sollen Fehler, z.B. Verzahnungsfehler oder Fehler der Tragbilder, solange korrigiert werden können, bis die gewünschte Qualität erreicht ist. Die Aufgabe besteht ferner darin, besondere Programme zu entwickeln, mit denen anhand der festgestellten Fehler die Werkzeugmaschine, z.B. die Schleifmaschine, die Verzahnungsmaschine oder die Läppmaschine, nochmals eingestellt werden können, um die fehlerhaften Werkstücke zu korrigieren.

Die erfindungsgemässe Vorrichtung, mit der diese Aufgabe gelöst wird, weist die in Anspruch 1 genannten Merkmale auf.

Die erfindungsgemässe Vorrichtung hat folgende Vorteile:

Durch den Rechner können die einzelnen Maschinen und Prüfgeräte über Disketten einfach miteinander verbunden oder gekoppelt und gesteuert werden. Die Bearbeitungsmaschinen und Prüfgeräte müssen nicht beisammen sein, sondern können beliebig weit voneinander entfernt sein. Die Reihenfolge der einzelnen Fertigungsschritte für verschiedene Werkstücke, z.B. Kegelräder, kann beliebig sein, da alle Daten für die Maschinen, Geräte und den Rechner automatisch lesbar sind und auf der Diskette die Werkstücke begleiten. Die Disketten lassen sich jederzeit ergänzen und abändern, um Messdaten und Korrekturberechnungen zu berücksichtigen.

Die Meisterwerkstücke, insbesondere die Meisterräder, können körperliche existente Zahnräder oder als "Datenfile" vorhandene fiktive Gebilde sein.

Ein Ausführungsbeispiel der erfindungsgemässen Vorrichtung zur Herstellung von Zahnrädern ist im folgenden anhand der beigefügten Zeichnung ausführlich beschrieben. Es zeigt:

Fig.1 die gesamte Vorrichtung in rein schematischer Darstellung,

Fig.2 eine Verzahnungsmaschine in perspektivischer Darstellung,

Fig.3 eine schematische Darstellung der kartesischen Koordinaten der Zahnflanken eines Zahnrades.

Fig.4 eine graphische Darstellung der Messergebnisse,

Fig.5 eine Tabelle der Einstelldaten.

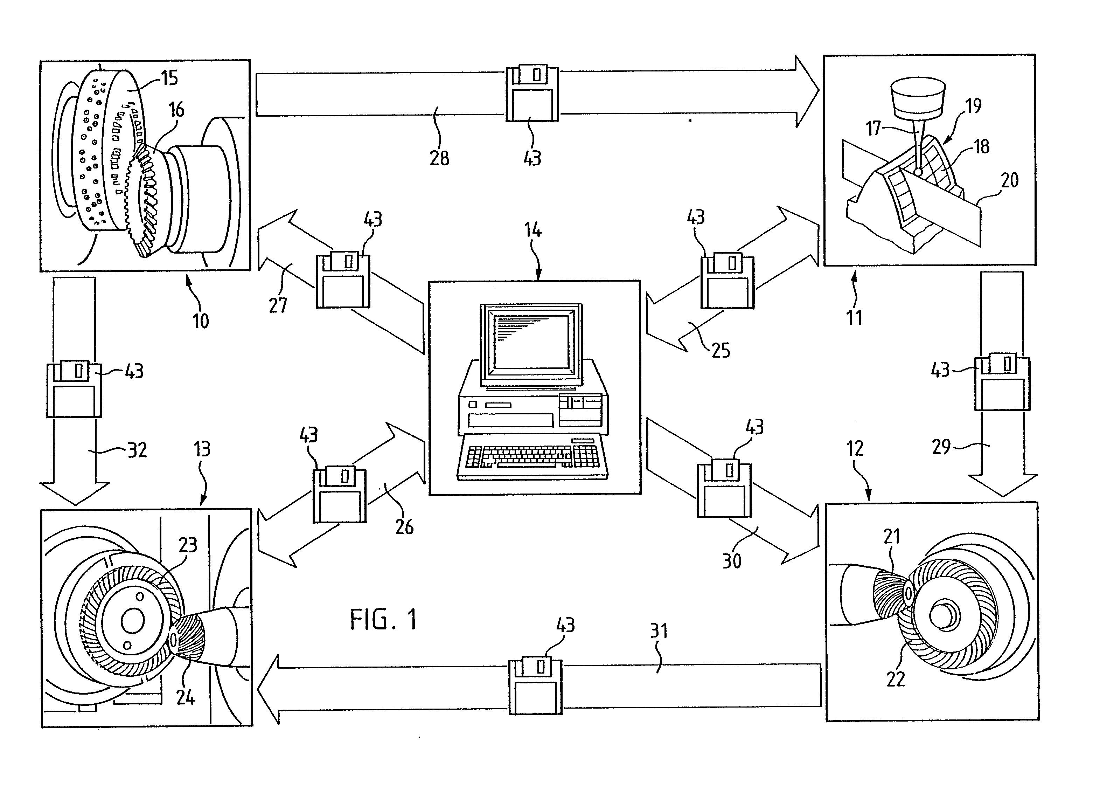

Gemäss Fig.1 setzt sich die Vorrichtung zur Herstellung von Zahnrädern aus folgenden Teilen zusammen:

1. einer Verzahnungsmaschine 10
2. einem Koordinatenmessgerät 11
3. einer Schleifmaschine 12
4. einer Läpp- und Testmaschine 13
5. einem Verzahnungsrechner 14 .

Die Verzahnungsmaschine 10 besitzt einen Messerkopf 15 zum Schneiden eines Zahnrades 16, insbesondere eines spiralverzahnten Kegelrades. Eine solche Verzahnungsmaschine 10 wird hier als bekannt vorausgesetzt. Insbesondere wird als bekannt vorausgesetzt, dass Werkzeugmaschinen ganz allgemein und im besonderen auch Verzahnungsmaschinen numerisch steuerbar sind. Dies bedeutet, dass das herzustellende Zahnrad mit Hilfe eines numerischen Programmes - das auf einer Diskette 43 gespeichert ist - geschnitten wird.

Das Koordinatenmessgerät 11 weist ein Tastorgan 17 auf zum Abtasten einer Zahnflanke 18 des Zahnes 19 am Zahnrad 16.

Insbesondere werden jeweils eine Anzahl Punkte in einer zum Zahn 19 vertikalen Ebene 20 abgetastet. Auch das Koordinatenmessgerät 11 wird hier als bekannt vorausgesetzt. Insbesondere wird auch hier als bekannt vorausgesetzt, dass die zu messenden Ist-Werte nach einem Programm mit Hilfe des Tastorganes 17 auf der Zahnflanke 18 abgetastet werden und mit den gewünschten Sollwerten - welche der Rechner 14 bestimmt hat - verglichen werden.

Die Schleifmaschine 12 weist eine Schleifscheibe 21 zum Schleifen eines Werkstückes 22 auf. Auch hier wird eine Schleifmaschine 12 zum Schleifen der Zahnflanken 18 eines Zahnes 19 am Zahnrad 16 als bekannt vorausgesetzt. Insbesondere wird auch hier als bekannt vorausgesetzt, dass mit Hilfe eines numerischen Programmes die Schleifmaschine 12 derart gesteuert wird, dass allfällige Fehler - die mit Hilfe des Koordinatenmessgerätes bestimmt wurden -ausgeglichen werden.

Auf der Läpp- und Testmaschine 13 befindet sich ein Tellerrad 23 und ein Ritzel 24 miteinander im Eingriff. Dieses Zahnradpaar 23,24 wird in an sich bekannter Weise mit einer Läpppaste geläppt und entweder zuvor oder anschliessend wird das Tragbild auf den Zahnflanken geprüft, d.h. es wird geprüft, in welchem Bereich sich die Flanke eines Tellerradzahnes mit der Flanke eines Ritzelzahnes berührt. Dieser Berührungsbereich - eben das Tragbild - kann durch Aenderung der relativen Lage von Tellerrad und Ritzel korrigiert werden. Es wird solange geläppt, bis das gewünschte Tragbild erreicht ist. Insbesondere wird auch hier als bekannt vorausgesetzt, dass mit Hilfe eines numerischen Programmes der Läppvorgang als auch die Prüfung des Tragbildes derart gesteuert werden, dass Verzahnungsfehler und Tragbildfehler korrigiert werden.

Auf dem Verzahnungsrechner 14 werden die erforderlichen Programme erzeugt und die erforderlichen Messwerte berechnet.

Durch Pfeile ist in Fig.1 angedeutet, in welcher Richtung die Informationen geleitet werden.

Sowohl vom Koordinatenmessgerät 11 als auch von der Läpp- und Testmaschine 13 zum Verzahnungsrechner 14 werden Informationen in beiden Richtungen transportiert, was durch die Doppelpfeile 25 und 26 angedeutet ist. Zwischen allen übrigen Geräten und Maschinen werden die Informationen nur in einer Richtung transportiert, was durch einfache Pfeile 27,28,29,30,31 und 32 angedeutet ist. Als Transportmittel dient die erwähnte Diskette 43.

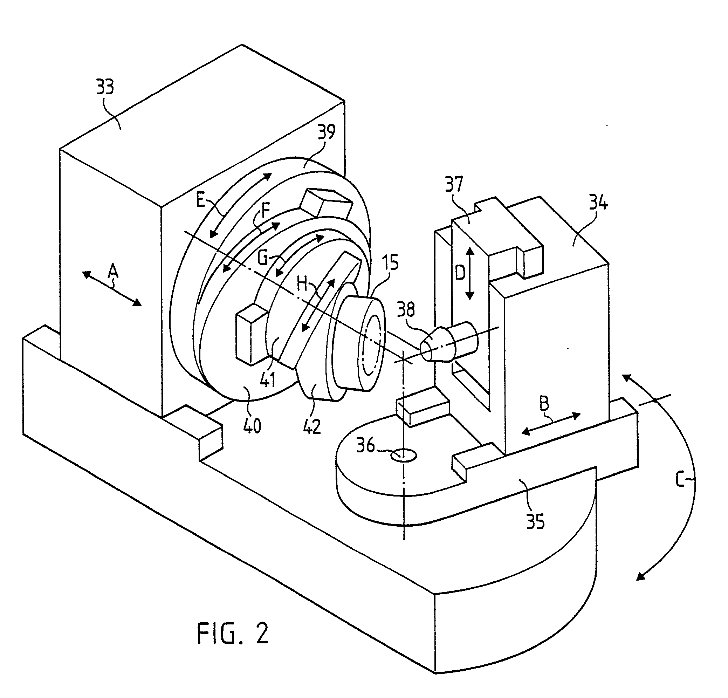

Gemäss Fig. 2 werden mit Hilfe des Verzahnungsrechners 14 (Fig.1) und der Diskette 43 (Fig.1) folgende Elemente der Verzahnungsmaschine 10 eingestellt:

1. Ein Wälzstock 33 wird in Richtung des Pfeiles A gegenüber einem Spindelstock 34 verschoben.

2. Der Spindelstock 34 wird auf einem schwenkbaren Schlitten 35 in Richtung des Pfeiles B horizontal verschoben.

3. Der schwenkbare Schlitten 35 wird mit dem Spindelstock 34 um eine Achse 36 in Richtung des Pfeiles C verschwenkt.

4. Ein Spindelträger 37 wird auf dem Spindelstock 34 zusammen mit der Werkstückspindel 38 in Richtung des Pfeiles D vertikal verschoben.

5. Eine Wälztrommel 39 wird auf dem Wälzstock 33 in Richtung des Pfeiles E verschwenkt.

6. Eine Exzentertrommel 40 wird auf der Wälztrommel 39 in Richtung des Pfeiles F verschwenkt.

7. Eine Orientierungstrommel 41 wird auf der Exzentertrommel 40 in Richtung des Pfeiles G verschwenkt.

8. Eine Neigungstrommel 42 wird auf der Orientierungstrommel 41 in Richtung des Pfeiles H verschwenkt.

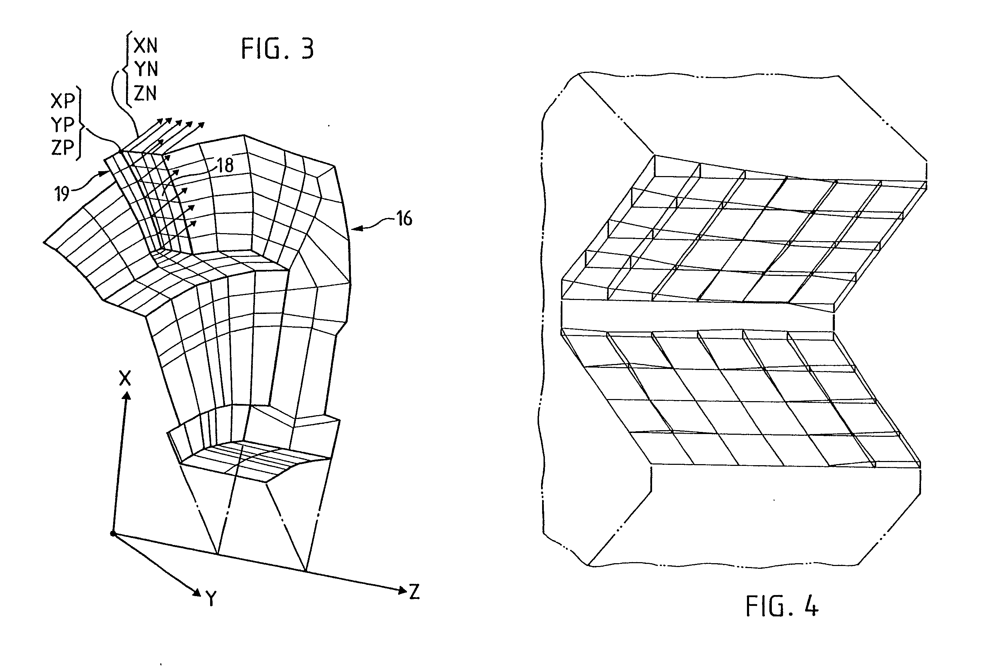

Gemäss Fig.3 werden mit Hilfe des Koordinatenmessgerätes 11 auf einer Zahnflanke 18 eines Zahnes 19 am Zahnrad 16 die Koordinaten einzelner Punkte XP, YP, ZP und ihrer zugehörigen Normalen XN, YN, ZN ausgemessen und mit den Sollwerten verglichen.

In Fig.4 sind die Abweichungen der Ist-Werte gegenüber den Sollwerten graphisch dargestellt.

Die Herstellung eines einzelnen Zahnrades erfolgt nach folgenden Verfahrensschritten:

1. Auf einer Diskette 43 werden im Verzahnungsrechner 14 folgende Angaben gespeichert:

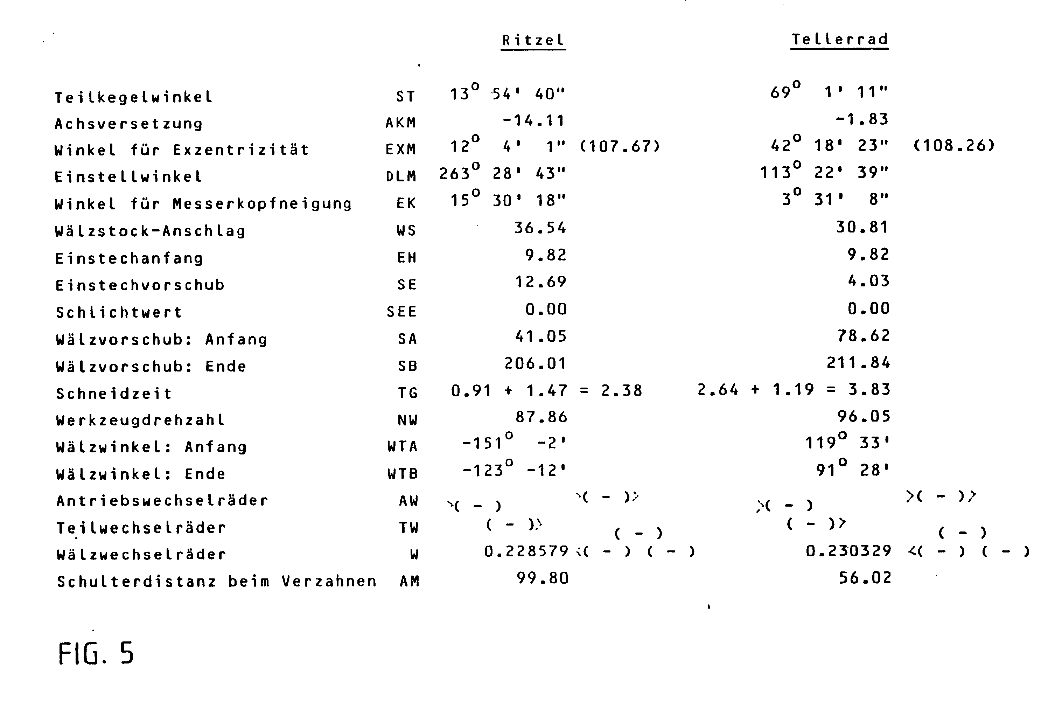

a) die ursprünglichen Maschineneinstelldaten (File 1) gemäss Fig.5,

b) die kartesischen Flankenkoordinaten und Normalen (File 2) gemäss Fig.4,

c) die Kennwerte der Verlagerungscharakteristik (File 3)

d) die Verzahnungskorrekturen (File 4).

2. Die Diskette 43 gelangt dann zur Verzahnungsmaschine 10 und die Maschine wird in der oben erwähnten Weise eingestellt. Mit diesen Angaben ist die Verzahnungsmaschine in der Lage, ein Zahnrad 16 herzustellen. Dieses Zahnrad 16 wird eventuell noch gehärtet und gelangt dann auf das Koordinatenmessgerät 11.

3. Auf dem Koordinatenmessgerät 11 werden gemäss Fig.3 mit Hilfe eines Programmes die einzelnen Koordinatenmesspunkte und ihre zugehörigen Normalen ausgemessen. Diese Ist-Werte können dann mit Hilfe eines weiteren Programmes mit den Soll-Werten, die auf der Diskette 43 gespeichert sind, verglichen werden. Diese Sollwerte bilden ein theoretisches Meisterrad. Die Abweichungen zwischen den Ist-Werten und den Soll-Werten lassen sich gemäss Fig.5 graphisch darstellen.

4. Diese Abweichungen werden ebenfalls auf der Diskette 43 gespeichert; File 5 und File 6 als Fehler des Tellerrades und als Fehler des Ritzels sowohl für die konkaven als auch für die konvexen Flanken.

5. Falls die Abweichungen die zulässigen Werte überschreiten, gelangt die Diskette 43 wieder in den Verzahnungsrechner 14. Mit Hilfe eines geeigneten Programmes kann aus diesen Soll-Ist-Abweichungen, die sich aus der ursprünglichen Maschineneinstellung ergeben haben und mit Hilfe von Korrekturkennwerten eine neue korrigierte Maschineneinstellung berechnet werden. Auf der Diskette 43 werden die ursprünglichen Maschineneinstelldaten durch neue Maschineneinstelldaten ersetzt.

6. Auf der Verzahnungsmaschine 10 werden mit Hilfe der korrigierten Diskette 43 korrigierte Zahnräder 16 hergestellt.

7. Das korrigierte Zahnrad 16 gelangt nochmals auf das Koordinatenmessgerät 11. Im allgemeinen hat nun das Zahnrad 16 die gewünschte Form und der Kreislauf -Verzahnungsrechner 14 - Verzahnungsmaschine 10 -Koordinatenmessgerät 11 - wird unterbrochen, sofern die gemessenen Soll-Ist-Abweichungen die zulässigen Abweichungen nicht mehr überschreiten.

8. Wenn nötig wird nun dieses Korrigierte Zahnrad auf der Schleifmaschine 12 geschliffen und auf der Läppmaschine 13 geläppt und auf der Testmaschine 13 geprüft.

9. Auf der Läppmaschine 13 werden auch die Einbaumasse der Kegelradpaare eingestellt. Die theoretisch berechnete Verlagerungscharakteristik (File 3) ermöglicht es, ein vollständiges Läppprogramm zu ermitteln und durchzuführen.

Von den einzelnen Maschinen und Messgeräten sind noch folgende Merkmale zu erwähnen:

## 1. Die Verzahnungsmaschine (10)

Die erfindungsgemässe Vorrichtung besitzt eine Verzahnungsmaschine (10), bei der mindestens eine, vorzugsweise sämtliche Einstellachsen mit einem elektronischen Lesesystem versehen sind. Die Achsen werden von Hand gelöst und nach der Verstellung wieder von Hand fixiert. Auf einem Monitor werden die Soll-Werte der Diskette 43 und die Ist-Werte der Achsen angezeigt und können abgelesen werden. Dadurch lassen sich die Achsen sehr genau positionieren. Die Maschine sollte alle Verstellungen selbsttätig durchführen. Vorzugsweise sollten alle kinematischen Koppelungen durch Bahnsteuerungen und elektronische Getriebe ausgeführt werden, damit sich die Verzahnungsmaschine nach dem Einlesen der Diskette 43 selbsttätig einstellen kann.

Die Verzahnungsmaschine 10 besitzt ein Diskettenlaufwerk mit einem Rechner und eine elektronische Steuerung, die als bekannt vorausgesetzt werden können und hier nicht dargestellt sind.

## 2. Das Koordinatenmessgerät (11)

Für die erfindungsgemässe Vorrichtung wird ein handelsübliches dreidimensional arbeitendes Messgerät mit Diskettenlaufwerk verwendet.

## 3. Schleifmaschine (12), Läpp- und Testmaschine (13)

Für die Schleifmaschine 12, die Läppmaschine 13 und die Testmaschine 13 gelten dieselben Ausführungen wie für die Verzahnungsmaschine 10.

## 4. Der Verzahnungsrechner (14)

Es handelt sich um einen handelsüblichen Rechner mit Diskettenlaufwerk.

## 5. Die Diskette (43)

Es werden handelsübliche Disketten 43 verwendet.

Die beschriebene Vorrichtung hat den Vorteil, dass alle Maschinen und Messgeräte numerisch gesteuert werden können und über Disketten 43 miteinander gekoppelt sind. Dank der Verbindung der einzelnen Maschinen über Disketten 43 müssen die Maschinen nicht nahe beisammen stehen. Auch die Reihenfolge der einzelnen Verfahrensschritte kann beliebig sein, da alle Vorgänge automatisch ablaufen. Die Werkstücke gelangen mit den Disketten 43 von einer Maschine auf die andere. Bei der bekannten One-Line-Verbindung mehrerer Maschinen mittels Leitrechner ist eine solche beliebige Reihenfolge bei der Fertigung der Zahnräder nicht möglich. Die Informationen auf der Diskette 43 können jederzeit ergänzt werden.

Die iterative Beseitigung von Verzahnungsfehlern:

Das verzahnte Werkstück, d.h. das erzeugte Zahnrad 16 weist im allgemeinen Fehler auf, die sich im wesentlichen aus fehlerhafter Messerkopfeinstellung, der ungenauen Maschinengeometrie und der fehlerhaften Maschinenkinematik ergeben.

Falls bereits fehlerfreie Ritzel und Tellerräder, sogenannte Meisterräder, vorhanden sind, kann ein noch fehlerhaftes Tellerrad mit einem Meisterritzel oder ein noch fehlerhaftes Ritzel mit einem Meistertellerrad auf der Testmaschine abgerollt werden. Die erforderlichen Getriebeachslagen werden von der Diskette 43 auf die Testmaschine übertragen.

Das nun entstehende Tragbild ist falsch und die Achslagen (Achsversatz, Einbaumass Ritzel, Einbaumass Tellerrad) werden auf der Testmaschine von Hand so lange geändert, bis eine optimale Annäherung an die gewünschte Tragbildform - die gemäss Auslegungsberechnung ermittelt wurde - erreicht ist. Die neuen Achslagen können nun auf einer Diskette 43 gespeichert werden. Wird diese Diskette 43 mit den zusätzlichen Informationen in den Rechner eingesetzt, so kann der Rechner aus den korrigierten Achslagen eine Korrektur der Einstelldaten für die Verzahnungsmaschine vornehmen und auf diese Weise können systematische Fehler korrigiert werden.

In der Diskette 43 werden jetzt die neuen Maschineneinstelldaten gespeichert. Mit dieser Diskette 43 kann nun auf der Verzahnungsmaschine 10 ein verbessertes Zahnrad 16 erzeugt werden.

Dieser Vorgang kann so oft wiederholt werden, bis das hergestellte Zahnrad die gewünschte Genauigkeit und Qualität erreicht hat.

Man kann auch empirisch vorgehen und Vorkorrekturen an der Verzahnungsmaschine 10 einstellen. Die empirisch korrigierten Zahnräder werden dann auf der Testmaschine geprüft und wiederum schrittweise verbessert. Anschliessend wird die beste auf diese Weise erreichte Verzahnungsmaschineneinstellung mit Hilfe des Rechners 14 auf der Diskette 43 gespeichert.

## Ansprüche

1. Vorrichtung zur Erzeugung eines Zahnrades, insbesondere eines spiralverzahnten Kegelrades, enthaltend folgende Elemente:
- eine Bearbeitungsmaschine, insbesondere Schneidmaschine (10), Schleifmaschine (12)-,Läppmaschine (13) zur Bearbeitung des Zahnrades (16);
- ein Prüfgerät, insbesondere ein Koordinatenmessgerät (11), ein Testgerät (13) zum Prüfen und zum Vermessen des bearbeiteten Zahnrades (16);
- einen Rechner, insbesondere einen Verzahnungsrechner (14) zur Steuerung der Zahnradbearbeitung, insbesondere des Schneide-, Schleif-, Läpp-, Mess- und Prüfvorganges;
- eine Diskette (43) als Verbindungsmittel zwischen Bearbeitungsmaschine (10,12,13), Prüfgerät (11,13) und Rechner (14) während der Bearbeitung, Prüfung und Vermessung des zu erzeugenden Zahnrades (16), derart,
dass diese Elemente gemeinsam ein iteratives, schrittweises Beseitigen von Bearbeitungsfehlern ermöglichen.

2. Vorrichtung nach Anspruch 1, gekennzeichnet durch:
- eine Schneidmaschine (10)
- ein Koordinatenmessgerät (11) und
- einen Rechner (14).

3. Vorrichtung nach Anspruch 1, gekennzeichnet durch:
- eine Schleifmaschine (12)
- ein Koordinatenmessgerät (11) und
- einen Rechner (14).

4. Vorrichtung nach Anspruch 1, gekennzeichnet durch:
- eine Läppmaschine (13)
- ein Koordinatenmessgerät (11) und

- einen Rechner (14).

5. Vorrichtung nach Anspruch 1, gekennzeichnet durch:
- eine Schneidmaschine (10)
- ein Testgerät (13) und
- einen Rechner (14).

6. Vorrichtung nach Anspruch 1, gekennzeichnet durch:
- eine Schleifmaschine (12)
- ein Testgerät (13) und
- einen Rechner (14).

7. Vorrichtung nach Anspruch 1, gekennzeichnet durch:
- eine Läppmaschine (13)
- ein Testgerät (13) und
- einen Rechner (14).

8. Vorrichtung nach Anspruch 1, gekennzeichnet durch:
- eine Schneidmaschine (10)
- eine Schleifmaschine (12)
- ein Koordinatenmessgerät (11) und
- einen Rechner (14).

9. Vorrichtung nach Anspruch 1, gekennzeichnet durch:
- eine Schneidmaschine (10)
- eine Schleifmaschine (12)
- ein Testgerät (13) und
- einen Rechner (14).

10. Vorrichtung nach Anspruch 1, gekennzeichnet durch:
- eine Schleifmaschine (12)
- eine Läppmaschine (13)
- ein Koordinatenmessgerät (11) und
- einen Rechner (14).

11. Vorrichtung nach Anspruch 1, gekennzeichnet durch:
- eine Schleifmaschine (12)
- eine Läppmaschine (13)
- ein Testgerät (13) und
- einen Rechner (14).

12. Vorrichtung nach Anspruch 1, gekennzeichnet durch:
- eine Schneidmaschine (10)
- eine Schleifmaschine (12)
- eine Läppmaschine (13)
- ein Koordinatenmessgerät (11) und
- einen Rechner (14).

13. Vorrichtung nach Anspruch 1, gekennzeichnet durch:
- eine Schneidmaschine (10)
- eine Schleifmaschine (12)
- eine Läppmaschine (13)
- ein Testgerät (13) und
- einen Rechner (14).

14. Vorrichtung nach Anspruch 1, gekennzeichnet durch:
- eine Schneidmaschine (10)
- eine Schleifmaschine (12)

- eine Läppmaschine (13)
- ein Koordinatenmessgerät (11)
- ein Testgerät (13) und
- einen Rechner (14).

15. Verfahren zur Erzeugung eines Zahnrades, insbesondere eines spiralverzahnten Kegelrades, gekennzeichnet durch die folgenden Verfahrensschritte:

a) Bearbeiten eines Werkstückes zum Erzeugen eines Zahnrades

b) Prüfen des Zahnrades zum Feststellen von Fehlern, durch Ausmessen oder durch Abrollen auf fehlerfreien Ritzeln bzw. Tellerrädern, sogenannten Meisterrädern;

c) Speichern der Messergebnisse und Berechnen neuer Einstelldaten;

d) Erzeugen eines verbesserten Zahnrades mit Hilfe der gespeicherten Messergebnisse;

e) Wiederholen der Schritte b), c) und d), bis die gewünschte Genauigkeit und Qualität erreicht ist.

FIG. 1

EP 0 353 451 A2

FIG. 2

FIG. 3

XN
YN
ZN

XP
YP
ZP

19

18

16

X

Y

Z

FIG. 4

EP 0 353 451 A2

|  |  | Ritzel | Tellerrad |
| --- | --- | --- | --- |
| Teilkegelwinkel | ST | $13^{\circ}$ 54' 40" | $69^{\circ}$ 1' 11" |
| Achsversetzung | AKM | -14.11 | -1.83 |
| Winkel für Exzentrizität | EXM | $12^{\circ}$ 4' 1" (107.67) | $42^{\circ}$ 18' 23" (108.26) |
| Einstellwinkel | DLM | $263^{\circ}$ 28' 43" | $113^{\circ}$ 22' 39" |
| Winkel für Messerkopfneigung | EK | $15^{\circ}$ 30' 18" | $3^{\circ}$ 31' 8" |
| Wälzstock-Anschlag | WS | 36.54 | 30.81 |
| Einstechanfang | EH | 9.82 | 9.82 |
| Einstechvorschub | SE | 12.69 | 4.03 |
| Schlichtwert | SEE | 0.00 | 0.00 |
| Wälzvorschub: Anfang | SA | 41.05 | 78.62 |
| Wälzvorschub: Ende | SB | 206.01 | 211.84 |
| Schneidzeit | TG | 0.91 + 1.47 = 2.38 | 2.64 + 1.19 = 3.83 |
| Werkzeugdrehzahl | NW | 87.86 | 96.05 |
| Wälzwinkel: Anfang | WTA | $-151^{\circ}$ -2' | $119^{\circ}$ 33' |
| Wälzwinkel: Ende | WTB | $-123^{\circ}$ -12' | $91^{\circ}$ 28' |
| Antriebswechselräder | AW | )( - )      )( - )> | )( - )      >( - )> |
| Teilwechselräder | TW | ( - )>       ( - ) | ( - )>       ( - ) |
| Wälzwechselräder | W | 0.228579 )( - ) ( - ) | 0.230329 )( - ) ( - ) |
| Schulterdistanz beim Verzahnen | AM | 99.80 | 56.02 |

FIG. 5

EP 0 353 451 A2